(19) Europäisches Patentamt
European Patent Office
Office européen des brevets

(11) Veröffentlichungsnummer: **0 344 552 A2**

(12) # EUROPÄISCHE PATENTANMELDUNG

(21) Anmeldenummer: **89109106.8**

(51) Int. Cl.⁴: **C07F 9/40 , A01N 57/20**

(22) Anmeldetag: **20.05.89**

(30) Priorität: **02.06.88 DE 3818764**

(43) Veröffentlichungstag der Anmeldung:
**06.12.89 Patentblatt 89/49**

(84) Benannte Vertragsstaaten:
**BE CH DE FR GB IT LI NL**

(71) Anmelder: **BAYER AG**

**D-5090 Leverkusen 1 Bayerwerk(DE)**

(72) Erfinder: **Riebel, Hans-Jochem, Dr.**
**In der Beek 92**
**D-5600 Wuppertal 1(DE)**
Erfinder: **Hartwig, Jürgen, Dr.**
**Franz-Esser-Strasse 44**
**D-5090 Leverkusen 3(DE)**
Erfinder: **Becker, Benedikt, Dr.**
**Metzkausener Strasse 14**
**D-4020 Mettmann(DE)**
Erfinder: **Matthaei, Hans-Detlef, Dr.**
**Paul-Klee-Strasse 67**
**D-5090 Leverkusen 1(DE)**

(54) **Dithiophosphonsäureester.**

(57) Die Erfindung betrifft die neuen Dithiophosphonsäureester der allgemeinen Formel (I)

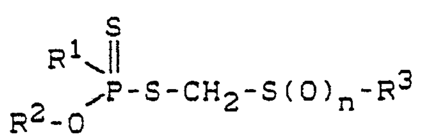

(I)

in welcher
n für die Zahlen 0, 1 oder 2 steht und
$R^1$, $R^2$ und $R^3$ gleich oder verschieden sind und für Alkyl stehen,
welche als Schädlingsbekämpfungsmittel verwendet werden können.

EP 0 344 552 A2

## Dithiophosphonsäureester

Die Erfindung betrifft neue Dithiophosphonsäurester, Verfahren zu ihrer Herstellung und ihre Verwendung als Schädlingsbekämpfungsmittel.

Es ist bekannt, daß bestimmte Dithiophosphorsäureester, wie z.B. Dithiophosphorsäure-O,O-diethylester-S-ethylthiomethylester (Thimet/Phorate), Dithiophosphorsäure-O-ethylester-S,S-dipropylester (Mocap/Ethoprop) und Dithiophosphorsäure-O-ethylester-S,S-di-sec-butylester (Rugby/Sebufos), zur Bekämpfung von tierischen Schädlingen verwendet werden können (vgl. US-P 2 586 655 bzw. US-P 3 268 393, US-P 4 535 077, DE-AS 1 148 549 und DE-AS 1 142 132). Die Eigenschaften dieser bekannten Verbindungen sind jedoch unter bestimmten Umständen, insbesondere bei niedrigen Wirkstoffkonzentrationen und Aufwandmengen, nicht immer voll zufriedenstellend.

Es wurden nun die neuen Dithiophosphonsäureester der allgemeinen Formel (I)

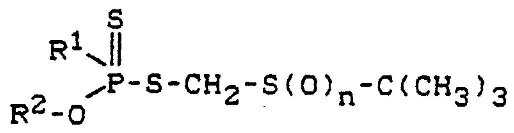

(I)

in welcher
n für die Zahlen 0, 1 oder 2 steht und
$R^1$ und $R^2$ gleich oder verschieden sind und für Alkyl stehen,
gefunden.

Weiter wurde gefunden, daß man die neuen Dithiophosphonsäureester der allgemeinen Formel (I) erhält, wenn man

(a) Dithiophosphonsäureester-Salze der allgemeinen Formel (II)

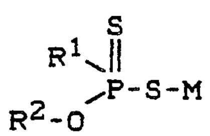

(II)

in welcher
$R^1$ und $R^2$ die oben angegebene Bedeutung haben und
M für Natrium, Kalium oder Ammonium steht,
mit Alkylthiomethylhalogeniden der allgemeinen Formel (III)
$X-CH_2-S-C(CH_3)_3$ (III)
in welcher
X für Halogen steht,
gegebenenfalls in Gegenwart eines Verdünnungsmittels umsetzt, oder

(b) Dithiophosphonsäureester der allgemeinen Formel (Ia)

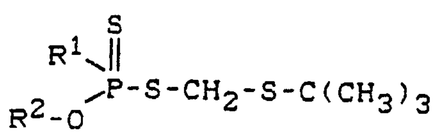

(Ia)

in welcher $R^1$ und $R^2$ die oben angegebene Bedeutung haben,
mit Oxidationsmitteln, gegebenenfalls in Gegenwart von Katalysatoren und gegebenenfalls in Gegenwart von Verdünnungsmitteln, umsetzt.

Die neuen Verbindungen der allgemeinen Formel (I) verfügen über Eigenschaften, die ihre Verwendung als Schädlingsbekämpfungsmittel ermöglichen; sie zeigen starke Wirkung gegen Arthropoden und Nematoden und können insbesondere zur Bekämpfung von Insekten und Nematoden im Pflanzenschutz sowie zur Bekämpfung von Insekten im Haushalts- und Hygienebereich verwendet werden.

Alkyl in der Definition von $R^1$ ist geradkettig oder verzweigt und enthält vorzugsweise 1 bis 4, insbesondere 1 oder 2 Kohlenstoffatome. Beispielhaft seien Methyl und Ethyl (vorzugsweise Ethyl) genannt.

Alkyl in der Definition von $R^2$ ist geradkettig oder verzweigt und enthält vorzugsweise 1 bis 4, insbesondere 2 oder 3 Kohlenstoffatome. Beispielhaft seien Ethyl, Propyl und Isopropyl (vorzugsweise Ethyl) genannt.

In den allgemeinen Formeln bedeutet n 0, 1 oder 2, vorzugsweise 0 oder 2 und besonders bevorzugt 0.

Bevorzugt werden die neuen Dithiophosphonsäureester der Formel (I), in welcher
n für die Zahlen 0, 1 oder 2 (vorzugsweise 0) steht,
$R^1$ für Alkyl mit 1 bis 4 Kohlenstoffatomen (vorzugsweise Ethyl) steht,
$R^2$ für Alkyl mit 1 bis 4 Kohlenstoffatomen (vorzugsweise Ethyl) steht.

Besonders bevorzugt werden die neuen Dithiophosphonsäureester der Formel (I), in welcher
n für die Zahlen 0, 1 oder 2 (vorzugsweise 0) steht,
$R^1$ für Methyl oder Ethyl (vorzugsweise Ethyl) steht und
$R^2$ für Ethyl, Propyl oder Isopropyl (vorzugsweise Ethyl) steht.

Die bei den erfindungsgemäßen Verbindungen aufgeführten bevorzugten Reste bzw. Bereiche gelten für die Ausgangsstoffe entsprechend.

Verwendet man als Ausgangsstoffe das Natriumsalz von Ethan-dithiophosphonsäure-O-ethylester und tert-Butylthio-methylchlorid, so kann der Reaktionsablauf beim erfindungsgemäßen Herstellungsverfahren (a) durch das folgende Formelschema wiedergegeben werden:

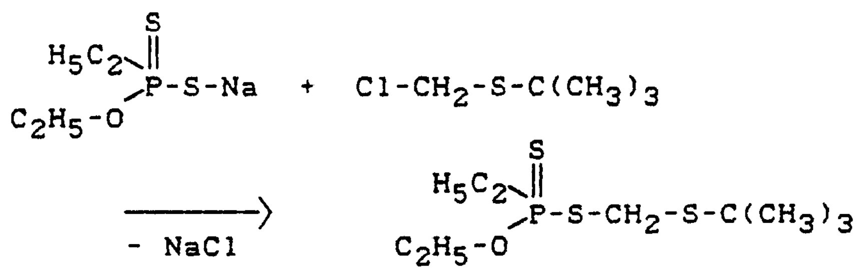


Verwendet man als Ausgangsstoffe Ethan-dithiophosphonsäure-O-ethylester-S-(tert-butylthiomethylester) und Hydrogenperoxid, so kann der Reaktionsablauf beim erfindungsgemäßen Verfahren (b) durch das folgende Formelschema wiedergegeben werden:

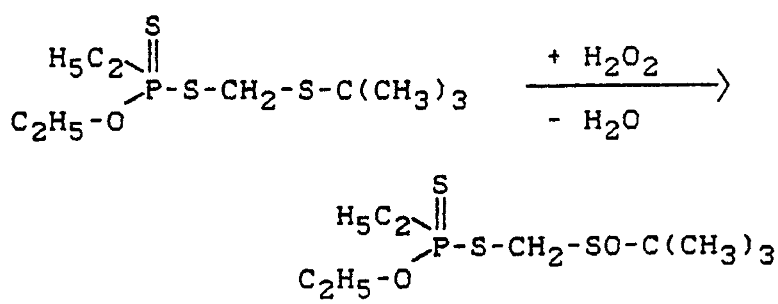


Die beim erfindungsgemäßen Verfahren (a) zur Herstellung von Verbindungen der Formel (I) als Ausgangsstoffe zu verwendenden Dithiophosphonsäureester-Salze sind durch die Formel (II) allgemein definiert.

Als Beispiele für die Ausgangsstoffe der Formel (II) seien genannt:
Die Natrium-, Kalium- und Ammonium-Salze von Methan- und Ethan-dithiophosphonsäure-O-ethylester, -O-propylester und-O-isopropylester.
Die Ausgangsstoffe der Formel (II) sind bekannt (vgl. DE-AS 11 01 417).

Die beim erfindungsgemäßen Verfahren (a) weiter als Ausgangsstoffe zu verwendenden t.-Butylthiomethylhalogenide sind durch die Formel (III) allgemein definiert.

In Formel (III) bedeutet Halogen Chlor, Brom und Iod, vorzugsweise Chlor.
Als Beispiel für die Ausgangsstoffe der Formel (III) sei genannt:
tert-Butylthio-methylchlorid.

Die Ausgangsstoffe der Formel (III) sind bekannt und/oder können nach an sich bekannten Verfahren hergestellt werden. Man erhält die Verbindungen der Formel (III), beispielsweise, wenn man das Thiol der Formel (IV)

$HS-C(CH_3)_3$ (IV)

mit Paraformaldehyd und konzentrierter Salzsäure, gegebenenfalls in Gegenwart eines Verdünnungsmittels, wie z.B. Toluol, bei Temperaturen zwischen -10 °C und +20 °C umsetzt.

Die beim erfindungsgemäßen Verfahren (b) zur Herstellung von Verbindungen der Formel (I) als Ausgangsstoffe zu verwendenden Dithiophosphonsäureester sind durch die Formel (Ia) allgemein definiert. Sie entspricht der Formel (I), in welcher n für 0 steht.

Beispiele für die Ausgangsstoffe der Formel (Ia) sind in der nachstehenden Tabelle 1 aufgeführt.

Tabelle 1: Beispiele für die Verbindungen der Formel (Ia)

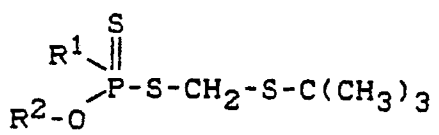

(Ia)

| $R^1$ | $R^2$ |
|---|---|
| $CH_3$ | $C_2H_5$ |
| $C_2H_5$ | $C_2H_5$ |
| $C_2H_5$ | $C_3H_7$ |
| $CH_3$ | $C_3H_7$ |
| $C_2H_5$ | $CH(CH_3)_2$ |
| $CH_3$ | $CH(CH_3)_2$ |

Die Ausgangsstoffe der Formel (Ia) sind erfindungsgemäße, neue Verbindungen; sie können nach dem erfindungsgemäßen Verfahren (a) hergestellt werden.

Das erfindungsgemäße Verfahren (a) zur Herstellung der neuen Dithiophosphonsäureester der Formel (I) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutylketon, Ester wie Essigsäuremethylester und -ethylester, Nitrile wie z. B. Acetonitril und Propionitril, Amide wie z. B. Dimethylformamid, Dimethylacetamid und N-Methyl-pyrrolidon

sowie Dimethylsulfoxid, Tetramethylensulfon und Hexamethylphosphorsäuretriamid.

Die Reaktionstemperaturen können bei dem erfindungsgemäßen Verfahren (a) in einem größeren Bereich variiert werden. Im allgemeinen arbeitet man bei Temperaturen zwischen 0 °C und 80 °C, vorzugsweise bei Temperaturen zwischen 10 °C und 50 °C.

Verfahren (a) wird im allgemeinen bei Normaldruck durchgeführt.

Zur Durchführung des erfindungsgemäßen Verfahrens (a) werden die jeweils benötigten Ausgangsstoffe im allge meinen in angenähert äquimolaren Mengen eingesetzt. Es ist jedoch auch möglich, eine der beiden jeweils eingesetzten Komponenten in einem größeren Überschuß zu verwenden. Die Reaktionen werden im allgemeinen in einem geeigneten Verdünnungsmittel durchgeführt und das Reaktionsgemisch wird mehrere Stunden bei der jeweils erforderlichen Temperatur gerührt. Die Aufarbeitung erfolgt bei dem erfindungsgemäßen Verfahren (a) jeweils nach üblichen Methoden.

Das erfindungsgemäße Verfahren (b) wird unter Einsatz eines Oxidationsmittels durchgeführt. Es kommen hierfür die üblichen zur Oxidation von Dialkylsulfiden (Thioethern) zu Dialkylsulfoxiden bzw. -sulfonen geeigneten Chemikalien in Betracht. Als Beispiele seien genannt genannt: Hydrogenperoxid, Perameisensäure, Peressigsäure, Perbenzoesäure und m-Chlor-perbenzoesäure sowie Natrium- und Calcium-hypochlorit.

Das erfindungsgemäße Verfahren (b) wird gegebenenfalls in Gegenwart eines Katalysators durchgeführt. Es kommen vor allem diejenigen Katalysatoren in Betracht, die gewöhnlich zusammen mit den oben angegebenen Oxidationsmitteln bei Oxidationsreaktionen eingesetzt werden. Als Beispiele seien genannt: Natriumwolframat, Ammoniummolybdat, Titan(III)-chlorid und Selendioxid.

Das erfindungsgemäße Verfahren (b) wird vorzugsweise in Gegenwart von Verdünnungsmitteln durchgeführt. Es kommen die gleichen Lösungsmittel in Betracht, die oben für Verfahren (a) angegeben wurden, daneben jedoch auch Wasser und/oder Alkohole, wie z.B. Methanol, Ethanol, Propanol, Isopropanol, Butanol, Isobutanol, sec-Butanol und tert-Butanol.

Die Reaktionstemperaturen können bei dem erfindungsgemäßen Verfahren (b) in einem größeren Bereich variiert werden. Im allgemeinen arbeitet man bei Temperaturen zwischen -20 °C und +100 °C, vorzugsweise bei Temperaturen zwischen 0 °C und +50 °C.

Verfahren (b) wird im allgemeinen bei Normaldruck durchgeführt.

Zur Durchführung des erfindungsgemäßen Verfahrens (b) setzt man je Mol Ausgangsverbindung der Formel (Ia) im allgemeinen zwischen 1 und 5 Mol, vorzugsweise zwischen 1 und 3 Mol, eines Oxidationsmittels ein.

Die Reaktionskomponenten werden im allgemeinen bei Raumtemperatur oder unter leichter Außenkühlung vermischt und das Reaktionsgemisch wird bis zum Ende der Umsetzung gerührt. Die Aufarbeitung kann nach üblichen Methoden durchgeführt werden.

Die Wirkstoffe eignen sich zur Bekämpfung von tierischen Schädlingen, vorzugsweise Arthropoden und Nematoden, insbesondere Insekten, Spinnentieren und Nematoden die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum,

Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Verbindungen können bevorzugt zur Bekämpfung von Bodeninsekten verwendet werden. Bodeninsekten sind Insekten, deren Lebensraum (ganz oder in bestimmten Entwicklungsstadien) sich im oder in der Nähe des Bodens befindet.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streck mitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse

Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Verbindungen werden vorzugsweise als Pflanzenschutzmittel eingesetzt. Sie eignen sich insbesondere zur Bekämpfung von Nematoden und Bodeninsekten, also Insekten, welche im Boden bzw. in Bodennähe vorkommen.

## Herstellungsbeispiele

### Beispiel 1

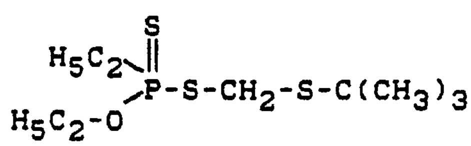

[Verfahren (a)]

Eine Mischung aus 12,0 g (0,05 Mol) Ethandithiophosphonsäure-O-ethylester-Kaliumsalz, 7,0 g (0,05 Mol) tert-Butylthio-methylchlorid und 80 ml Acetonitril wird 6 Stunden bei 20 °C bis 30 °C gerührt. Dann wird mit Methylenchlorid verdünnt, mit Wasser gewaschen, die organische Phase mit Natriumsulfat getrocknet und filtriert. Vom Filtrat wird das Lösungsmittel im Wasserstrahlvakuum sorgfältig abdestilliert. Man erhält 10,5 g (77 % der Theorie) Ethandithiophosphonsäure-O-ethylester-S-(tert-butylthiomethylester)

als öligen Rückstand vom Brechungsindex $n_D^{22}$ = 1,5448.

Beispiel 2

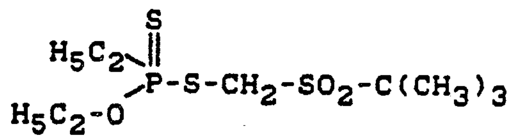

[Verfahren (b)]

Eine Mischung aus 8,2 g (0,03 Mol) Ethandithiophosphonsäure-O-ethylester-S-(tert-butylthiomethylester) - vgl. Beispiel 1 - sowie 20 g (0,11 Mol) 3-Chlor-perbenzoesäure und 150 ml Chloroform wird 2 Stunden bei 20° C bis 40° C gerührt. Dann wird filtriert, das Filtrat eingeengt, in Cyclohexan aufgenommen, erneut filtriert und vom erhaltenen Filtrat wird das Lösungsmittel im Wasserstrahlvakuum sorgfältig abdestilliert. Man erhält 9,0 g (98 % der Theorie) Ethan-dithiophosphonsäure-O-ethylester-S-(tert-butylsulfonylmethylester) als öligen Rückstand vom Brechungsindex $n_D^{22}$ = 1,5265.

Analog zu den Beispielen 1 und 2 und gemäß der allgemeinen Beschreibung der erfindungsgemäßen Herstellungsverfahren können die in der nachstehenden Tabelle 2 aufgeführten Verbindungen der Formel (I) hergestellt werden.

Tabelle 2: Herstellungsbeispiele für die Verbindungen der Formel (I)

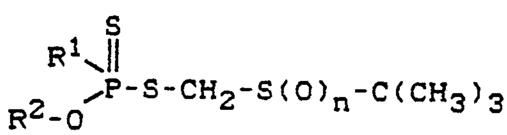
(I)

| Bsp.-Nr. | n | $R^1$ | $R^2$ | Physikalische Konstante |
|---|---|---|---|---|
| 3 | 0 | $-C_2H_5$ | $-CH(CH_3)_2$ | |
| 4 | 0 | $-C_2H_5$ | $-C_3H_7$ | |
| 5 | 1 | $-C_2H_5$ | $-C_2H_5$ | $n_D^{22}$ =1,5265 |

Ausgangsstoffe der Formel (III)

Beispiel (III-1)

$Cl-CH_2-S-C(CH_3)_3$

55 g (0,5 Mol) tert.-Butylmercaptan werden unter Rühren zu einer auf 5 °C bis 10 °C gekühlten Mischung aus 16 g (0,5 Mol) Paraformaldehyd, 250 ml konzentrierter Salzsäure und 250 ml Toluol tropfenweise gegeben. Das Reaktionsgemisch wird 30 Minuten gerührt, die organische Phase abgetrennt und destilliert.

Man erhält 36,6 g (53 % der Theorie) tert.-Butylthiomethylchlorid vom Siedepunkt 85-90 °C (12 Torr/ 2 kPa).

Die übrigen erfindungsgemäß verwendbaren Ausgangsstoffe der Formel (III) können entsprechend Beispiel III-1 erhalten werden.

Die biologische Wirksamkeit der erfindungsgemäßen Verbindungen soll anhand der folgenden Beispiele erläutert werden.

## Beispiel A

Grenzkonzentrations-Test / Bodeninsekten

| | |
|---|---|
| Testinsekt: | Phorbia antiqua-Maden im Boden |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. bei einer Wirkstoffkonzentration von 2,5 ppm die Verbindungen gemäß den Herstellungsbeispielen 1 und 3 Wirkungsgrade zwischen 95 % und 100 %.

## Beispiel B

Grenzkonzentrations-Test / Bodeninsekten

| | |
|---|---|
| Testinsekt: | Diabrotica balteata-Larven im Boden |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7

Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. bei einer Wirkstoffkonzentration von 0,6 ppm die Verbindungen gemäß den Herstellungsbeispielen 1 und 3 einen Wirkungsgrad von 95 %.

Beispiel C

Grenzkonzentrations-Test / Wurzelsystemische Wirkung

| | |
|---|---|
| Testinsekt: | Phaedon cochleariae-Larven |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigten z.B. bei einer Wirkstoffkonzentration von 20 ppm die Verbindungen gemäß den Herstellungsbeispielen 1 und 3 einen Wirkungsgrad von 100 %.

Beispiel D

Grenzkonzentrations-Test / Wurzelsystemische Wirkung

| | |
|---|---|
| Testinsekt: | Myzus persicae |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs

abgeleitet. Sie ist 100 %, wenn alle Testtiere abgetötet sind und 0 %, wenn noch genau so viele Testinsekten leben wie bei der unbehandelten Kontrolle.
Bei diesem Test zeigten z.B. bei einer Wirkstoffkonzentration von 20 ppm die Verbindungen gemäß den Herstellungsbeispielen 1 und 3 einen Wirkungsgrad von 100 %.

Beispiel E

Grenzkonzentrations-Test / Nematoden

| | |
|---|---|
| Testnematode: | Meloidogyne incognita |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.
Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.
Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.
Bei diesem Test zeigten z.B. bei einer Wirkstoffkonzentration von 10 ppm die Verbindungen gemäß den Herstellungsbeispielen 1 und 3 einen Wirkungsgrad von 100 %.

Beispiel F

Grenzkonzentrations-Test

| | |
|---|---|
| Testnematode: | Globodera rostochiensis |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18 °C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z.B. bei einer Wirkstoffkonzentration von 5 ppm die Verbindungen gemäß den Herstellungsbeispielen 1 und 3 einen Wirkungsgrad von 100 %.

Beispiel G

Aphis-Test (systemische Wirkung)

| | |
|---|---|
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit je 20 ml Wirkstoffzubereitung der gewünschten Konzentration werden Bohnenpflanzen (Vicia faba), die stark von der schwarzen Bohnenlaus (Aphis fabae) befallen sind, angegossen, so daß die Wirkstoffzubereitung in den Boden eindringt, ohne den Sproß zu benetzen. Der Wirkstoff wird von den Wurzeln aufgenommen und in den Sproß weitergeleitet.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigten z.B. bei einer Wirkstoffkonzentration von 0,1 % die verbindungen gemäß den Herstellungsbeispielen 1 und 3 nach 4 Stunden einen Wirkungsgrad von 100 %.

Beispiel H

Nephotettix-Test

| | |
|---|---|
| Lösungsmittel: | 7 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichstteil Wirkstoff mit der angegebenen Menge Lösungsmittel und der angegebenen Menge Emulgator und verdünnt das Konzentrat mit Wasser auf die gewünschte Konzentration.

Reiskeimlinge (Oryza sativa) werden durch Tauchen in die Wirkstoffzubereitung der gewünschten Konzentration behandelt und mit der Grünen Reiszikade (Nephotettix cincticeps) besetzt, solange die Keimlinge noch feucht sind.

Nach der gewünschten Zeit wird die Abtötung in % bestimmt. Dabei bedeutet 100 %, daß alle Zikaden abgetötet wurden; 0 % bedeutet, daß keine Zikaden abgetötet wurden.

Bei diesem Test zeigten z.B. bei einer Wirkstoffkonzentration von 0,01 % die Verbindungen gemäß den Herstellungsbeispielen 1 und 3 nach 6 Tagen einen Wirkungsgrad von 100 %.

Beispiel I

$LT_{100}$-Test für Dipteren

Testtiere: Musca domestica-Maden (Stamm Hans)
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der

Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die Verbindungen der Herstellungsbeispiele 1 und 3 bei einer Wirkstoffkonzentration von 0,02 % nach 100 Minuten einen 100 %igen Knock-down-Effekt.

Beispiel J

$LT_{100}$-Test für Dipteren

Testtiere: Musca domestica-Maden
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit eiem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z.B. die Verbindungen der Herstellungsbeispiele 1 und 3 bei einer Wirkstoffkonzentration von 0,02 % nach 40 bis 70 Minuten einen 100 %igen Knock-down-Effekt.

Beispiel K

Mückenlarven-Test

Testtiere: Aedes aegypti
Lösungsmittel: 99 Gewichtsteile Aceton
Emulgator: 1 Gewichtsteile Benzylhydroxibiphenylpolyglykolether

Zur Herstellung einer zweckmäßigen Wirkstoffzubereitung löst man 2 Gew.-Teile Wirkstoff in 1000 Volumenteilen Lösungsmittel, das Emulgator in der oben angegebenen Menge enthält. Die so erhaltene Lösung wird mit Wasser auf die gewünschten geringeren Konzentrationen verdünnt.

Man füllt die wäßrigen Wirkstoffzubereitungen der gewünschten Konzentration in Gläser und setzt anschließend etwa 25 Mückenlarven in jedes Glas ein.

Nach 24 Stunden wird der Abtötungsgrad in % bestimmt. Dabei bedeutet 100 %, daß alle Larven abgetötet worden sind. 0 % bedeutet, daß überhaupt keine Larven abgetötet worden sind.

Bie diesem Test zeigten z.B. bei einer Wirkstoffkonzentration von 1 ppm die Verbindungen gemäß den Herstellungsbeispielen 1 und 3 einen Wirkungsgrad von 100 %.

Beispiel L

$LT_{100}$-Test für Dipteren

Testtiere: Aedes aegypti
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge

Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigen z.B. die Verbindungen der Herstellungsbeispiele 1 und 3 bei einer Wirkstoffkonzentration von 0,02 % nach 60 Minuten einen 100 %igen Knock-down-Effekt.

Beispiel M

$LD_{100}$-Test

Testtiere: Sitophilus granarius
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. bei einer Wirkstoffkonzentration von 0,02 % die Verbindungen gemäß den Herstellungsbeispielen 1 und 3 einen Wirkungsgrad von 100 %.

Beispiel N

$LD_{100}$-Test

Testtiere: Blattella germanica
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigten z.B. bei einer Wirkstoffkonzentration von 0,2 % die Verbindungen gemäß den Herstellungsbeispielen 1 und 3 einen Wirkungsgrad von 100 %.

## Ansprüche

1. Dithiophosphonsäureester der allgemeinen Formel (I)

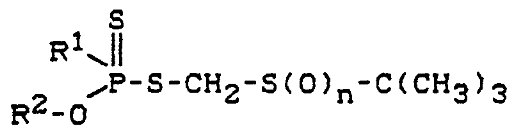

(I)

in welcher
n für die Zahlen 0, 1 oder 2 steht und
$R^1$ und $R^2$ gleich oder verschieden sind und für Alkyl stehen.

2. Dithiophosphonsäureester der Formel (I) gemäß Anspruch 1, in welcher
n für die Zahlen 0, 1 oder 2 steht,
$R^1$ für Alkyl mit 1 bis 4 Kohlenstoffatomen steht und
$R^2$ für Alkyl mit 1 bis 4 Kohlenstoffatomen steht.

3. Dithiophosphonsäureester der Formel (I) gemäß Anspruch 1, in welcher
n für die Zahlen 0, 1 oder 2 steht,
$R^1$ für Methyl oder Ethyl steht und
$R^2$ für Ethyl, Propyl oder Isopropyl steht.

4. Dithiophosphonsäureester der allgemeinen Formel (I) gemäß den Ansprüchen 1 bis 3, in welcher n für 0 steht.

5. Dithiophosphonsäureester der Formel

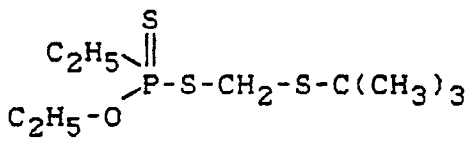

6. Verfahren zur Herstellung der Dithiophosphonsäureester der allgemeinen Formel (I)

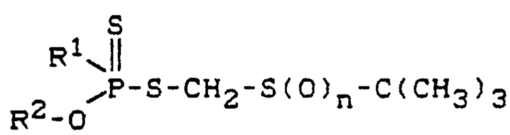

(I)

in welcher
n für die Zahlen 0, 1 oder 2 steht und
$R^1$ und $R^2$ gleich oder verschieden sind und für Alkyl stehen,
dadurch gekennzeichnet, daß man

(a) Dithiophosphonsäureester-Salze der allgemeinen Formel (II)

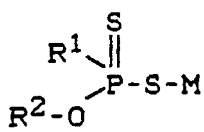

(II)

in welcher
$R^1$ und $R^2$ die oben angegebene Bedeutung haben und
M für Natrium, Kalium oder Ammonium steht,
mit Alkylthiomethylhalogeniden der allgemeinen Formel (III)

$X\text{-}CH_2\text{-}S\text{-}C(CH_3)_3$ (III)

in welcher
X für Halogen steht,
gegebenenfalls in Gegenwart eines Verdünnungsmittels umsetzt, oder

(b) Dithiophosphonsäureester der allgemeinen Formel (Ia)

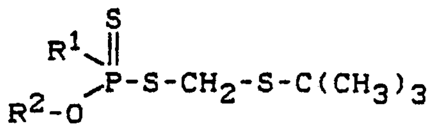

(Ia)

in welcher $R^1$ und $R^2$ die oben angegebene Bedeutung haben, mit Oxidationsmitteln, gegebenenfalls in Gegenwart von Katalysatoren und gegebenenfalls in Gegenwart von Verdünnungsmitteln, umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere von Insekten und Nematoden.

9. Verfahren zur Bekämpfung von Schädlingen, dadurch gekennzeichnet, daß man Verbindungen der Formel (I) gemäß Anspruch 1 oder 6 auf Schädlinge, vorzugsweise Insekten und Nematoden oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.